Europäisches Patentamt

European Patent Office

Office européen des brevets

(19)

(11) **EP 1 150 539 A1**

(12) **EUROPEAN PATENT APPLICATION**

(43) Date of publication:
**31.10.2001 Bulletin 2001/44**

(51) Int Cl.⁷: **H04R 1/10**, H04R 3/00,
H04M 1/60, A61F 11/14,
G10K 11/178

(21) Application number: **00830318.2**

(22) Date of filing: **28.04.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Silicomp SPA**
**20090 Opera (Milano) (IT)**

(72) Inventors:
• **Bolognesi, Gualtiero**
  **20090 Opera (Milano) (IT)**
• **Iacopini, Stefano**
  **20090 Opera (Milano) (IT)**

(74) Representative: **Petruzziello, Aldo et al**
  **Racheli & C. s.r.l.**
  **Viale San Michele del Carso, 4**
  **20144 Milano (IT)**

(54) **Control device for telephone station and acoustic headset usable in said telephone station**

(57) A control device (4) for connection of a telephone set (2) to at least one speaker (41) for reception of an audio signal and/or of at least one microphone (46) for transmission of an audio signal, comprising a digital signal processor (DSP) (10), an analog-to-digital converter (ADC) (11) to convert the digital signal coming from the telephone set (2) and/or from the microphone (46) to a digital signal that can be processed by the DSP (10), and a digital-to-analog converter (12) to convert the digital signal coming from the DSP (10) to an analog signal to be sent to the telephone set (2) and/or to the speaker (41), the control device (4) performing different functions, such as recognition of the voice conductors, storage and transmission of messages, equalization of the signal received and suppression of ambient noise.

FIG.1

## Description

The present invention refers to a control device for a telephone station and a headset usable in said telephone station.

A telephone station generally comprises a telephone set with a handset. At present, especially in office switchboards and call centres, telephone stations that employ a headset instead of the handset are increasingly used.

A headset generally comprise an earpiece assembly consisting of at least one electroacoustic transducer or speaker able to convert an electric signal to an acoustic signal that can be heard by the operator. The transducer is connected to a conductor cable for input of the audio signal coming from the telephone set.

Headsets of the telephone type also comprise a microphone connected to a conductor cable for output of the audio signal toward the telephone set. In this type of headset the microphone is brought near the mouth of the user by a supporting tube.

Telephone stations of the prior art, whether they use a handset or a headset, are limited to receiving the audio signal from the telephone set to the user's ear and transmission of the voice signal from the user's mouth to the telephone set. They do not perform any additional function, such as noise suppression or equalization of the audio signal received, for example, these being functions generally performed separately by appropriate dedicated apparatus, which are generally intended for other fields of application. For example noise suppressors are used in the avionics field to suppress the noise generated by the rotor of a helicopter and equalizers are used in stereophonic equipment for high-fidelity reproduction of the musical signal.

It is obvious, especially for operators who work with telephone headsets, that the noise coming from the outside environment is a considerable problem which disturbs the quality of the sound signal being transmitted and of the sound signal being received. In order to solve this problem known headsets have attempted to find mechanical solutions.

In order to insulate the user's ears from noises coming from outside, large insulating pads are applied to the earpiece assembly of the headset but are too heavy and uncomfortable for the user.

In order to prevent the sound signal being transmitted from being affected by outside disturbance, mechanical pressure compensation systems are used on the microphone tip, but these do not provide satisfactory results.

Telephone-answering machines that transmit a pre-recorded message to a user who calls to a telephone station are known to the art. This message is transmitted when the operator of the telephone station is engaged in another conversation or when the operator does not answer the call. There is no possibility of sending this message during the operator's conversation with the caller.

Some telephone operators, such as those working in call-centers, for example, are sometimes obliged to repeat the same information to all those they talk to on the telephone. In this case it would be useful to be able to record a voice message and transmit it to the person being talked to when necessary during the telephone conversation. It is obvious that this possibility would spare the operator the trouble of having always to repeat the same message.

Another drawback of the telephone stations according to the prior art is that when a telephone headset is connected to a telephone set, the sequence of voice conductors provided on the user interface of a generic telephone set is not recognized. That is to say, the telephone set has a predetermined sequence of four voice conductors: a pair of conductors for transmission and another pair of conductors for reception of signals. Said conductors of the telephone apparatus are connected by means of a cable to a handset. Said sequence of voice conductors is not standard and varies according to the model and manufacturer of the telephone set. When the handset must be replaced by a headset, it is necessary for the sequence of the voice conductors of the telephone set to match the sequence of voice conductors of the headset. Consequently, connection bridges are made between the voice conductors of the telephone set and the voice conductors of the headset and various tests of transmission and reception are carried out until the correct sequence of the voice conductors is found. This operation is long and complex. Indeed it can require up to eight attempts before the correct sequence of the voice conductors is found.

An object of the invention is to eliminate these problems, providing a control device and a headset for a telephone station that are able to suppress the noise coming from the outside environment.

Another object of the present invention is to provide a control device for a telephone station that is able to equalize the audio signal received by the telephone station.

Another object of the present invention is to provide a control device for a telephone station that is extremely practical and allows audio messages to be recorded and transmitted.

Another object of the present invention is to provide a control device for a telephone station that is versatile and able to adapt any kind of telephone set to any kind of headset.

These objects are achieved according to the invention with the control device for a telephone station according to appended independent claim 1 and with the headset for a telephone station according to independent claim 20.

Preferred embodiments of the invention are apparent from the dependent claims.

The control device according to the invention provides a Digital Signal Processor (DSP) able to process the audio signal converted to numerical format.

The DSP is able to manage various functions, such as suppression of the noise coming from the environment, equalization of the audio signal received, recording and transmission of an audio message, adaptation of a headset to a telephone set.

Further characteristics of the invention will be made clearer by the detailed description that follows, referring to a purely exemplary and therefore non limiting embodiment thereof, illustrated in the appended drawings, in which:

Figure 1 is a block diagram showing a control device according to the invention applied to a telephone station;

Figure 2 is a partial side view of a headset according to the invention showing an earpiece assembly and a microphone assembly;

Figure 3 is a section along the plane III-III of Figure 2;

Figure 4 is a block diagram showing the incoming and outgoing data flow from the control device according to the invention;

Figures 5a and 5b are two block diagrams showing, respectively, two implementations for recognition of the sequence of the voice conductors by means of the control device according to the invention;

Figure 6 is a block diagram showing the function for recording and trasmitting a message by the control device according to the invention;

Figure 7 is a block diagram showing the equalization function carried out by the control device according to the invention.

Figures 8a and 8b are block diagrams showing, respectively, two possible noise suppression algorithms that can be used on the reception channel and implemented by means of the control device and headset according to the invention;

Figure 9 is a block diagram showing a noise suppression algorithm that can be used on the transmission channel and implemented by means of the control device and the headset according to the invention.

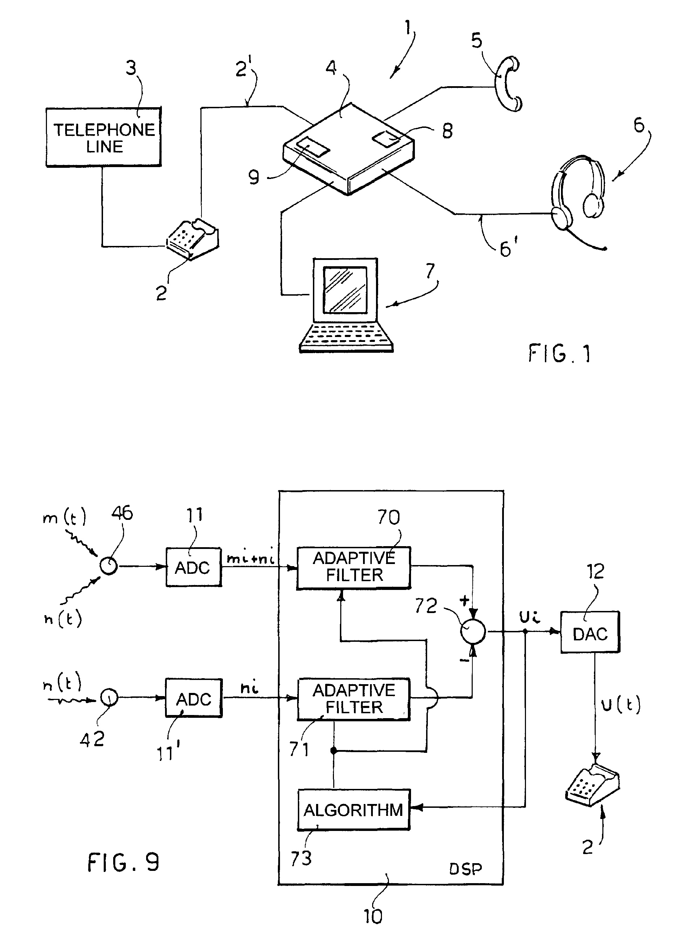

Figure 1 shows a telephone station denoted as a whole by reference numeral 1. The telephone station 1 comprises a telephone set 2 connected to a telephone line 3 and a control device 4 according to the invention. The control device is connected to a handset 5, to a headset 6 and to a computer 7. By way of example, three devices 5, 6 and 7 are shown; however, the control device 4 can be connected to only one of said devices or to more than one device or to different devices from those indicated, in any case comprising a microphone for transmission of the audio signal and/or a speaker for reception of the audio signal.

The control device 4 provides a switch 4 suitable to enable connection of one of the three devices 5, 6 and 7 to the telephone set 2. Moreover, the control device 4 provides a man-machine interface comprising a display 8 to display the functions it can perform and a keyboard or control panel 9 that allows the user to impart commands.

Specific reference will be made henceforth to the headset 6, it being understood that the functions carried out by the headset 6 can be performed by any other device equipped with a microphone and a speaker.

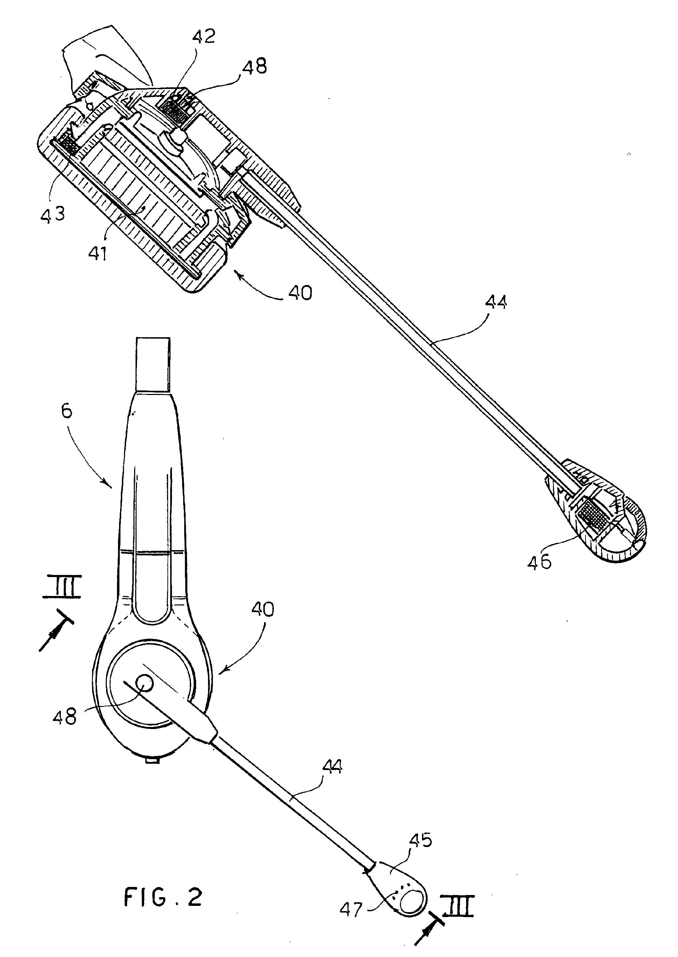

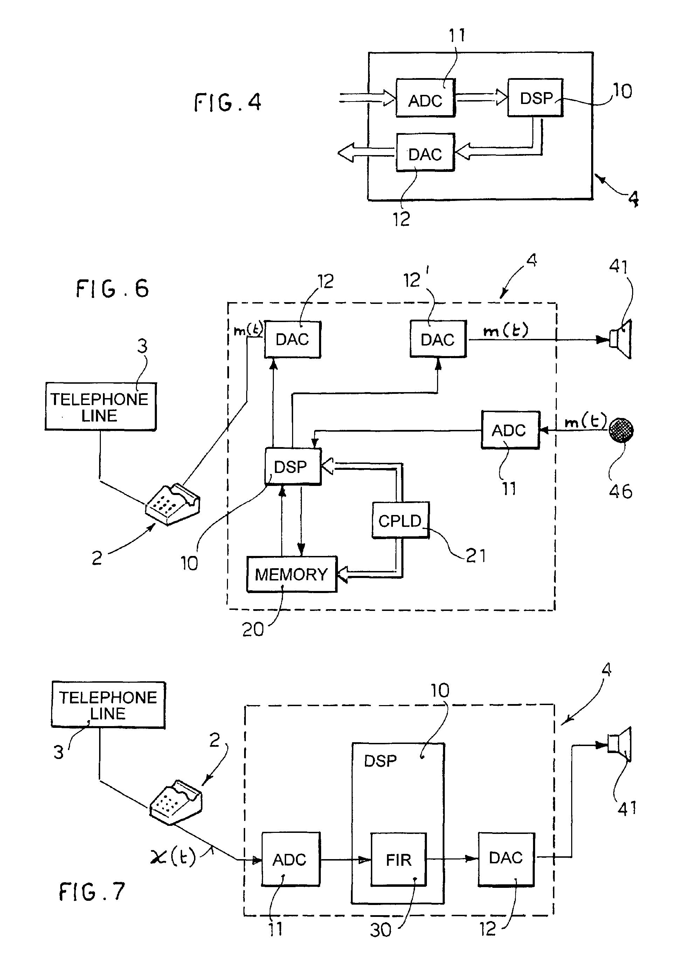

A headset 6 according to the invention will now be described with reference to Figures 2 and 3.

The headset 6 comprises two earpiece elements 40 connected by an elastic headband so as to be able to be positioned near the ears of the user. The earpiece element 40 comprises a shell that encloses an electroacoustic transducer or speaker 41 to transmit the audio signal received by the headset 6.

Inside the earphone element 40 is an environmental microphone 42, facing toward an opening 48 that is open toward the outside, so as to detect the noise coming from the outside environment as well as the audio signal coming from the speaker 41. Again inside the shell of the earpiece element 40 there is an error microphone 43 which is insulated from the outer environment and therefore detects only the audio signal coming from the speaker 41.

Assembled to the earpiece element 40 is a microphone assembly comprising a supporting rod 44 at the end of which is mounted a shell 45 that encloses a voice microphone 46 which is destined to be positioned near the mouth of the user to receive the user's voice signal. The microphone 46 therefore detects the user's voice signal and the ambient noise in a per se known manner. In order to achieve mechanical attenuation of the ambient noise detected by the microphone 46 the shell 45 has holes 47 able to allow the ambient noise coming from the outside to pass. Said noise which passes through the holes 47 compresses a diaphragm positioned on the microphone 46 and thus compensates for the compression that this diaphragm undergoes because of the ambient noise detected by the microphone 46.

As shown in Figure 4, the control device 4 comprises a digital signal processor 10, commonly known as a DSP. The DSP 10 processes digital signals, while the telephone set 2 and the audio headset 6 manage analog signals. Consequently the control device 4 comprises an analog-to-digital converter (ADC) 11 and a digital-to-analog converter (DAC) 12. The ADC 11 serves to convert the analog signal coming from the telephone set 2 and from the headset 6 to a digital signal that is sent to the DSP 10, and the DAC 12 serves to convert the digital signal coming from the DSP 10 to an analog signal to be sent to the telephone set 2 and the headset 6.

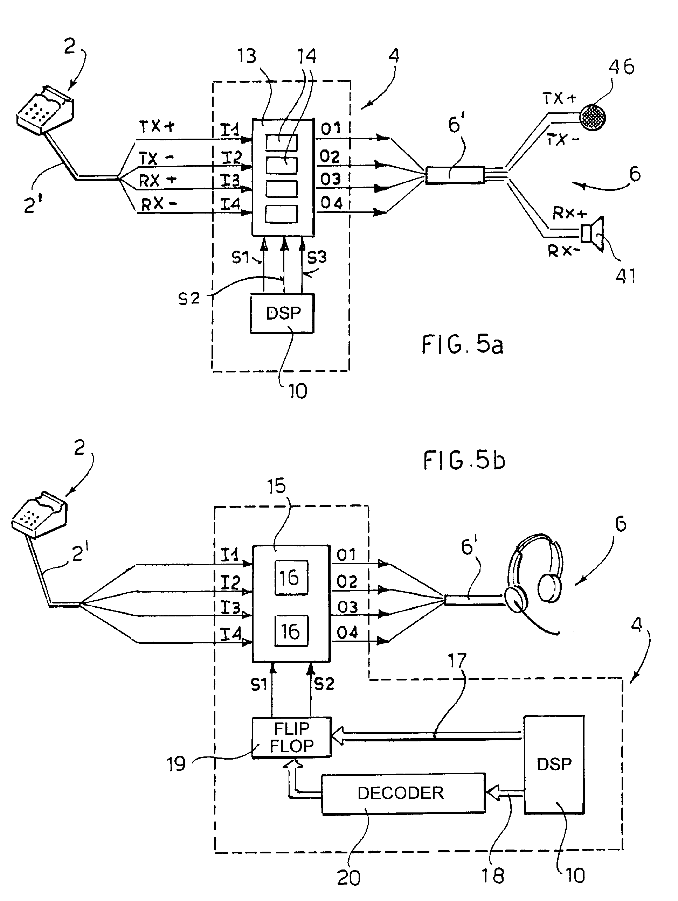

The function for recognition of the sequence of the voice conductors performed by the control device 4 will now be described with reference to Figures 5a and 5b.

As shown in Figure 5a, the telephone set 2 is connected to the control device 4 by means of a telephone connector cable 2' comprising four voice conductors: TX(+) for the microphone voice signal (positive pole); TX(-) for the microphone voice signal (negative pole); RX(+) for the incoming voice signal (positive pole); RX(-) for the incoming voice signal (negative pole). The microphone voice signal is the audio signal that goes from the voice microphone 46 to the telephone set 2. The incoming voice signal is the audio signal that goes from the telephone set 2 toward the speaker 41 of the headset 6.

The four voice conductors TX(+), TX(-), RX(+) and RX(-) coming from the connector 2' of the telephone set 2 are connected to four inputs I1, I2, I3 and I4 of a multiplexer 13 provided inside the control device 4. The multiplexer 13 is controlled by three selection lines S1, S2 and S3 coming from the DSP 10 and has four outputs O1, O2, O3 and O4 that are connected to four voice conductors of a telephone connection cable 6', in turn connected to the headset 6.

In order for the headset 6 to be connected correctly, the sequence of the voice conductors of the connector 2' must be the same as the sequence of the voice conductors of the connector 6'. To achieve this, in accordance with the selection signals S1, S2 and S3, at the outputs O1, O2, O3 and O4 of the multiplexer 13 there are four voice conductor wires TX(+),TX(-), RX(+) and RX(-), in the sequence suitable for connection of the connector cable 6' to the headset 6.

The multiplexer 13 is made up of four 8:1 selection multiplexer, denoted by reference numeral 14. Each multiplexer 14 has four inputs I1, I2, I3 and I4, three selection lines S1, S2, S3 and a corresponding output to each voice conductor that is to be connected to the headset 6.

This function for recognition of the sequence of the voice conductors, as shown in Figure 5b, can also be realized with a multiplexer 15 that has four inputs I1, I2, I3, I4, four outputs O1, O2, O3, O4 and only two selection lines S1 and S2. The multiplexer 15 is made up of of two 4:1 selection multiplexers denoted by reference numeral 16. Each multiplexer 16 has four inputs, two ouputs for a pair of voice conductors and is controlled by two selection lines. In this case the DSP 10 is connected by means of two data buses 17 and 18, each having 8 bits, to a flip-flop 19 and a decoder 20. The flip-flop is preferably an octal D flip-flop. The decoder 20 is in turn connected to the flip-flop 19. The flip-flop 19, in accordance with the data received from the DSP 10 and from the decoder 20, sends selection signals on the two selection lines S1 and S2 toward the multiplexer 15.

When the user connects a new headset 6 to the control device 4, he performs reception and transmission tests by means of the speaker 41 and the microphone 46 of the headset. On the basis of these tests, by means of the control keyboard 9, the user sends to multiplexer selection signals S1, S2 and S3, to select the sequence of the voice conductors which have given the best results during the test. It is obvious that this system is extremely simple and rapid and does not require the bridge connections necessary for recognition of the voice conductors according to the prior art.

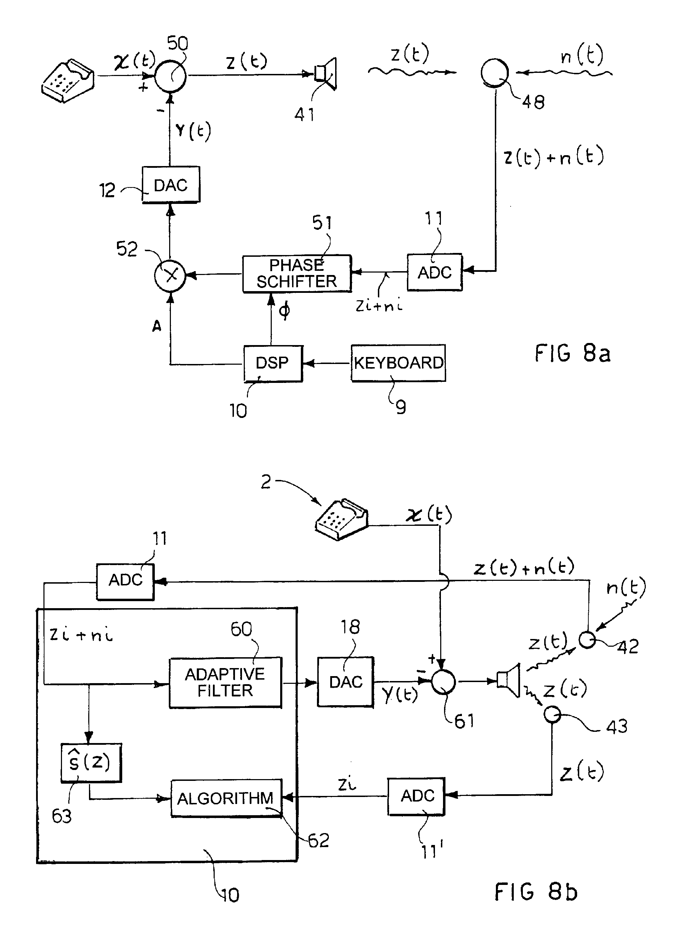

The message recording and transmission function carried out by the control device 4 will now be described with reference to Figure 6.

As shown in Figure 6, the control device 4 comprises a memory 20 that allows voice messages to be recorded. The memory 20 is preferably a flash memory, and is addressed by a Complex Programmable Logic Device (CPLD) 21 which is responsible for raising the management signals for reading of the memory 20.

In order to store a message in the memory 20, the user enables a storage modality by means of the keyboard 9. When the storage modality is enabled, the microphone 46 of the headset 6 detects a message to be recorded, generating an analog signal m(t) indicative of said message. The analog signal m(t) is converted to a digital signal, by means of an analog-to-digital converter 11, and is sent to the DSP 10 which records it, in digital format, in the memory 20.

When the operator wants to send the message stored in the memory 20, he/she enables a message-sending modality by means of the keyboard 9. During the message sending modality, the message is extracted from the memory 20 in digital format, by means of the DSP 10. This digital signal is converted to an analog signal m(t) by means of the digital-to-analog converters 12 and 12'. The respective analog signals m(t) leaving the DAC converters 12, 12' are sent simultaneously to the speaker 41 of the headset 6 and to the telephone set 2. In this manner the message m(t) can be listened to simultaneously by the operator wearing the headset 6 and the person engaged in conversation with the operator, at the other end of the line.

The function for equalization of the audio signal received, performed by the control device 4, will now be described with reference to Figure 7.

As shown in Figure 7, the control device 4 comprises a Finite Impulsive Response (FIR) filter 30 which allows equalization of the audio signal coming from the telephone set 2, so that the equalized audio signal can be received by the speaker 41 of the headset 6. The analog audio signal x(t) coming from the telephone set 2 is converted to a digital signal by an analog-to-digital converter 11. The digital signal leaving the ADC 11 is sent to the FIR filter 30 in which it is equalized. The output signal from the FIR filter 30 is converted to an analog signal by the digital-to-analog converter 12 and sent to the speaker 41.

The audio signal is modified by the FIR filter 30, varying the signal width according to the frequency. That is to say, the signal is amplified or attenuated to certain frequencies so as to adapt the sound to the operator's hearing. The FIR filter 30 filters the signal according to its equalization curve which is generated by means of the DSP 10. A plurality of predefined equalization curves can be pre-loaded into the control device 4, and the user can select the equalization curve he/she prefers by means of the keyboard 9, on the basis of the audio signal heard.

Two algorithms for ambient noise suppression during reception of an audio signal will now be described with reference to Figures 8a and 8b.

With reference to Figure 8a, the analog audio signal coming from the telephone set 2 is indicated by x(t); the analog signal coming from the feedback loop that implements the noise suppression algorithm is indicated by y(t); the analog audio signal that reaches the speaker 41 of the headset 6 is indicated by z(t). The signal x(t) and the signal y(t) are sent to an adder 50 at the output of which we have the signal z(t). From the equilibrium equation at the adder 50 we will have the expression:

$$z(t) = x(t) - y(t) \qquad (1).$$

Together with the signal z(t) that reaches the speaker 41 the user also perceives a noise, coming from the outside environment, which can be expressed by means of an analog signal, according to time, indicated by n(t). The noise n(t) can be of any kind, such as the hum of voices or the noise coming from machines.

Consequently the environmental microphone 42 detects the audio signal z(t) coming from the speaker 41 and the noise signal n(t) coming from the outside environment. The analog signal z(t)+n(t) detected by the environmental microphone 42 is sent to an analog-to-digital converter 11 at the output of which we have a digital signal $z_i + n_i$. The digital signal $z_i + n_i$ is sent to a phase shifter 51 in which it undergoes a phase shift $\phi$ which is equivalent to a time delay. The out-of-phase digital output signal from the phase shifter 51 is sent to a multiplier 52 in which it is multiplied by a constant A. The phase shift $\phi$ and the multiplication constant A can have variable values which are regulated by the DSP 10 which is controlled by the operator by means of the keyboard 9. The digital signal shifted out of phase and multiplied by the constant A s sent to a digital-to-analog converter 12 at the output of which we will have the analog signal y(t).

In accordance with the course of the feedback loop the analog signal y(t) will be given by the expression:

$$y(t) = A\,z(t{+}\tau) + A\,n(t{+}\tau) \qquad (2)$$

in which $\tau$ is the delay imparted by the phase shifter 51 and A is the multiplication constant imparted by the multiplier 52. Combining expressions (1) and (2) we have:

$$z(t) + A\,z(t{+}\tau) = x(t) - A(t{+}\tau) \qquad (3).$$

On the basis of expression (3), the signal z(t) reaching the speaker 41 contains the audio signal x(t) coming from the telephone line and a signal A n(t+τ), indicating the ambient noise which, on the basis of the adjustment made by the user to the amplification or attenuation constant A and to the delay τ, serves to suppress the noise n(t) coming from the outside environment.

With reference to Figure 8b, another algorithm for suppression of ambient noise will now be described. As in the previous case, a signal y(t) coming from the feedback loop that implements the ambient noise suppression algorithm is subtracted from the signal x(t) coming from the telephone set 2. Consequently a signal z(t) = x(t)-y(t) will reach the speaker 41.

The environmental microphone 42 detects the audio output signal z(t) from the speaker 41 and the noise n(t) coming from the outside environment. The analog signal z(t) + n(t) detected by the environmental microphone 42 is converted to a digital signal $z_i + n_i$ by means of an analog-to-digital converter 11. The digital output signal from the converter 11 is sent to an adaptive filter 60. The coefficients of the adaptive filter 60 are updated by means of an algorithm 62 implemented by the DSP 10. The filtered digital signal from the adaptive filter 60 is sent to a digital-to-analog converter 12 and the output signal y(t) from the digital-to-analog converter 12 is sent to an adder 61 in which it is added to the signal x(t) coming from the telephone line.

The error microphone 43, being insulated form the outside environment, detects only the signal z(t) coming from the speaker 41. The analog signal z(t) detected by the error microphone 43 is sent to an analog-to-digital converter 11' from which the output is a digital signal $z_i$ which is stored by a block 62 which implements the algorithm for updating of the coefficients of the adaptive filter 60. The algorithm implemented by the block 62 is preferably the NLMS (Normalized Least - Mean -Square) algorithm which is per se known. The digital output signal $z_i + n_i$ from the analog-to-digital converter 11 on the line of the environmental microphone 42 is sent into a filtering block 63 which has as its transfer function the spectral estimation $\hat{S}(z)$ of the transfer function S(z) of the speaker 41. The output from the filter 63 is sent to the block 62 which implements the algorithm for updating of the coefficients of the adaptive filer 60. Thus the block 62 receives the digital signal $z_i$ and the digital signal $z_i + n_i$ filtered by means of the spectral estimation of the transfer function S(z) of the speaker 41 and, on the basis of said received values, updates the coefficients of the adaptive filter 60.

Figure 9 shows an algorithm for suppression of ambient noise during transmission. That is to say, to suppress the ambient noise detected by the voice microphone 46 of the headset 6, while the operator is speaking.

When the operator is speaking, the voice microphone 46 detects a signal m(t) indicating the operator's voice signal and a signal n(t) indicating ambient noise. The analog signal m(t) + n(t) detected by the voice microphone 46 is sent to an analog-to-digital converter 11. The digital output signal $m_i + n_i$ from the analog-to-digital converter 11 is sent to an adaptive filter 70. The output signal from the adaptive filter 70 is sent to an adder 72.

When the operator is speaking into the voice microphone 46, the person he is talking to on the other end of the line does not speak, consequently the environmental microphone 42 positioned on the shell of the earpiece element 40 detects only the ambient noise n(t). The analog signal n(t) detected by the environmental microphone 42 is sent to an analog-to-digital converter 11'. The digital output signal $n_i$ from the analog-to-digital converter 11' is sent to an adaptive filter 71. The output signal from the adaptive filter 71 is sent to an adder 72. The output signal from the adder 72, denoted by $u_i$, is sent into a block 73 containing an algorithm for updating of the coefficients of the adaptive filters 70 and 71. The algorithm contained in the block 73 can preferably be an NLMS algorithm and is implemented by the DSP 10.

The digital output signal $u_i$ from the adder 72 is sent to a digital-to-analog converter 12 and the analog output signal u(t) from the digital-to-analog converter 12 is sent to the telephone set 2 and then to the telephone line.

Consequently the analog output signal u(t) will contain only the voice signal m(t) produced by the operator who speaks into the voice microphone 46. In fact the ambient noise n(t) is suppressed by means of the adaptive filtering method previously described with reference to Figure 9.

Numerous changes or modifications of detail within the reach of a skilled in the field may be made to the present embodiment of the invention, without departing from the scope of the invention as set forth in the appended claims.

**Claims**

1. A control device (4) for connection of a telephone set (2) to at least one speaker (41) for reception of an audio signal and/or at least one microphone (46) for transmission of an audio signal, **characterized in that** it comprises

    - a digital signal processor (DSP) (10),
    - an analog-to-digital converter (ADC) (11) to convert the analog signal coming from said telephone set (2) and/or from said microphone (46) to a digital signal that can be processed by the DSP (10) and
    - a digital-to-analog converter (12) to convert the digital signal coming from said DSP (10) to an analog signal to be sent to said telephone set (2) and/or to said speaker (41).

2. A control device according to claim 1, **characterized in that** said speaker (41) and said microphone (46) are included in a headset (6).

3. A control device according to claim 1 or 2, **characterized in that** it provides a man-machine interface comprising a display (8) able to display at least some of the functions of said control device (4) and a keyboard or control panel (9) to allow the user to impart commands to said DSP (10).

4. A control device according to any one of claims 1 to 3, **characterized in that** it comprises a multiplexer (13, 15) controlled by said DSP (10) for recognition of the sequence of voice conductors (TX(+), TX(-), RX(+) and RX(-)), so as to have correct connection of the telephone set (2) to the speaker (41) and to the microphone (46).

5. A control device according to claim 4, **characterized in that** said multiplexer (13, 15) comprises four inputs (I1, I2, I3, I4) for the four voice conductors coming from said telephone set (2), four outputs (O1, O2, O3, O4) for four voice conductors coming from said microphone (46) and from said speaker (41) and at least two selection lines (S1, S2, S3) coming from said DSP (10).

6. A control device according to any one of the preceding claims, **characterized in that** it comprises a memory (20) managed by said DSP (10) for storing and sending an audio message.

7. A control device according to claim 6, **characterized in that** said memory (20) is a flash memory and is addressed by means of a complex programmable logic device (CPLD) (21) that interacts with the DSP (10).

8. A control device according to any one of the preceding claims, **characterized in that** it comprises an equalization filter (30) for equalization of the audio signal coming from said telephone set (2) and directed toward said speaker (41).

9. A control device according to claim 8, **characterized in that** said equalization filter (30) is a FIR filter and the equalization curves of said FIR filter are regulated by said DSP (10) by means of commands imparted by the operator by means of the keyboard (9).

**10.** A control device according to any one of the preceding claims, **characterized in that** said DSP (10) processes an audio signal comprising the noise coming from the outside environment detected by means of an environmental microphone (42) so as to manage algorithms for suppression of ambient noise both during reception of the signal by means of the speaker (41) and during transmission of the signal by means of the voice microphone (46)

**11.** A control device according to claim 10, **characterized in that** said environmental microphone 42 is positioned inside the shell of an earpiece element (40) of the headset (6) facing toward an opening (48) in the shell of the earpiece element, so as to be able to detect noise coming from the outside environment.

**12.** A control device according to claim 10 or 11, **characterized in that** it comprises an adder (50, 61) that subtracts from the signal $(x(t))$ coming from the telephone set (2) a signal $(y(t))$ indicative of the signal received by said environmental microphone (42) in order to have as the output from said adder (50, 61) a signal $(z(t) = x(t) - y(t))$ containing a signal indicative of the ambient noise, which is sent to said speaker (41) to suppress the noise coming from the outside environment.

**13.** A control device according to claim 12, **characterized in that** on the path from said environmental microphone (42) to said adder (50) there is a phase shifter (51) to shift the phase of the signal so as to impart a delay and a multiplier (52) to impart an amplification or an attenuation to the signal, said phase shifter (51) and said multiplier (52) being controlled by said DSP (10) through commands imparted by the operator by means of the keyboard (9).

**14.** A control device according to claim 12, **characterized in that** on the way from said environmental microphone (42) to said adder (61) an adaptive filter (60) is provided.

**15.** A control device according to claim 14, **characterized in that** the coefficients of said adaptive filter (60) are updated by means of a block (62) comprising an algorithm of the NLMS type, implemented by said DSP (10).

**16.** A control device according to claim 15, **characterized in that** said block (62) containing the algorithm for updating of the coefficients of the adaptive filter (6) receives a signal coming from an error microphone (43) which detects the signal coming from said speaker (41) and is insulated from the noise of the outside environment and a signal coming from said environmental microphone (42) which is filtered by means of a filter (63) having as its transfer function the spectral estimation of the transfer function $(S(z))$ of the speaker (41).

**17.** A control device according to claim 16, **characterized in that** said error microphone (43) is positioned inside the shell of the earpiece element (40) of the headset (6) in proximity to the speaker (41) and insulated from the outside environment.

**18.** A control device according to claim 10 or 11, **characterized in that** it comprises an adder (72) which subtracts from a signal indicative of the signal coming from the voice microphone (46) a signal indicative of the signal received from said environmental microphone (42), in order to have as the output from said adder (72) a signal containing a signal indicative of the ambient noise, which is sent to said telephone apparatus (2) to suppress the noise coming from the outside environment.

**19.** A control device according to claim 18, **characterized in that** a first adaptive filter (70) is provided on the path from said voice microphone (46) to said adder (72) and a second adaptive filter (71) is provided on the path from said environmental microphone (42) to said adder (72), the coefficients of said first adaptive filter (70) and said second adaptive filter (71) being updated by a block (73) containing an algorithm for updating of the coefficients of the NLMS type, implemented by said DSP (10), said block (73) containing the algorithm for updating of the coefficients of the filters receiving the output signal from said adder (72).

**20.** A headset comprising at least one earpiece element (40) consisting of a shell that contains a speaker (41) for reception of the audio signal and a voice microphone (46) for transmission of the audio signal, connected by means of a rod (44) to said earpiece element (40), **characterized in that** it comprises an environmental microphone (42) enclosed inside said shell and facing toward an opening (48) made in said shell and communicating with the outside, so that said environmental microphone (42) can detect noise coming from the outside environment.

**21.** A headset according to claim 20, **characterized in that** it comprises an error microphone (43) positioned inside the shell of an earpiece element (40) and insulated from the outside environment, so that said error microphone (43) can detect only the audio signal coming from said speaker (41) provided inside the shell of the earpiece element (40).

**22.** An acoustic headset according to claim 20 or 21, **characterized in that** it is connected to a telephone set (2) by means of a control device (4) according to any one of claims 1 to 19.

FIG.1

FIG.9

FIG . 2

FIG.4

FIG.6

FIG.7

FIG. 5a

FIG. 5b

FIG 8a

FIG 8b

**European Patent Office**

## EUROPEAN SEARCH REPORT

Application Number

EP 00 83 0318

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 896 451 A (DEAS ALEXANDER ROGER) 20 April 1999 (1999-04-20) * the whole document * | 1,2 | H04R1/10 H04R3/00 H04M1/60 A61F11/14 G10K11/178 |
| Y | | 10-19 | |
| X | LANE J ET AL: "DSP SOFTWARE HELPS BUILD A SPEAKERPHONE" ELECTRONIC DESIGN,US,PENTON PUBLISHING, CLEVELAND, OH, vol. 44, no. 11, 28 May 1996 (1996-05-28), pages 110,112,114,-116,118,120, XP000623736 ISSN: 0013-4872 * the whole document * | 1,2 | |
| Y | | 10-19 | |
| Y | US 5 251 263 A (ANDREA DOUGLAS ET AL) 5 October 1993 (1993-10-05) * column 5, line 29 - column 6, line 41 * * column 7, line 35 - column 8, line 56 * * column 10, line 57 - column 11, line 42 * * column 12, line 30 - column 15, line 11 * * figures 1-3,7,10,11 * | 10-19 | TECHNICAL FIELDS SEARCHED (Int.Cl.7) H04M A61F G10K H04R |
| Y | GAN W S ET AL: "A low-cost digital signal processor-based ear-muff with adaptive active noise control" MICROPROCESSORS AND MICROSYSTEMS,GB,IPC BUSINESS PRESS LTD. LONDON, vol. 22, no. 7, 25 January 1999 (1999-01-25), pages 413-422, XP004158012 ISSN: 0141-9331 * the whole document * | 10-15, 18,19 | |

-/--

~~The present search report has been drawn up for all claims~~

| Place of search | Date of completion of the search | Examiner |
|---|---|---|
| MUNICH | 25 January 2001 | Nieuwenhuis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

LACK OF UNITY OF INVENTION
SHEET B

Application Number

EP 00 83 0318

The Search Division considers that the present European patent application does not comply with the requirements of unity of invention and relates to several inventions or groups of inventions, namely:

1. Claim : 1 and 2

   Claim 1 relates to a control device (4) for connection of a telephone set (2) to a speaker (41)and/or to a microphone (46), comprising:
   -) a digital signal processor (DSP) (10),
   -) an analog-to-digital convertor (ADC) to convert an analog signal coming from the telephone set and/or microphone into a digital signal, and
   -) an digital-to-analog convertor (DAC) to convert a digital signal coming from the DSP into an analog signal to be sent to the telephone set and/or speaker.

   According to claim 2 the speaker and microphone are included in a headset (6)

2. Claim : 3

   According to claim 3 the control device provides a man-machine interface comprising a display (8) to display and a control panel (9)

3. Claim : 4 and 5

   According to claim 4 the control device comprises a multiplexer (13,15) controlled by the DSP (10) for recognition of the sequence of voice conductors (TX(+), TX(-), RX(+), RX(-)), to enable correct connection of the telephone set (2) to the speaker (4) and the microphone (46).

4. Claim : 6 and 7

   According to claim 6 the control device comprises a memory (20) managed by said DSP (10) for storing and sending an audio message.

5. Claim : 8 and 9

   According to claim 8 the control device comprises a equalization filter (30) for equalization coming from telephone set (2) and directed toward said speaker (41).

6. Claims: 10-19

   According to claim 10 the DSP (10) of the control device manages algorithms to suppress ambient noise with an audio

**European Patent Office**

**LACK OF UNITY OF INVENTION
SHEET B**

Application Number

EP 00 83 0318

The Search Division considers that the present European patent application does not comply with the requirements of unity of invention and relates to several inventions or groups of inventions, namely:

signal comprising noise coming from an environmental microphone (42).


7. Claims: 20-22

Claim 20 relates to a noise cancelling headset comprising:
-) an earpiece element (40) consisting of a speaker (41) mounted in shell,
-) a voice microphone (46), connected to earpiece element by a microphone boom, and
-) an environmental microphone (42) enclosed inside the shell facings towards an opening in the shell and communicating to the outside.

**EP 1 150 539 A1**

**European Patent Office**

**EUROPEAN SEARCH REPORT**

Application Number

EP 00 83 0318

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 276 740 A (INANAGA KIYOFUMI ET AL) 4 January 1994 (1994-01-04) * column 3, line 1 - line 30 * * column 4, line 57 - column 7, line 20 * * figures 1,3,4 * | 20-22 | |
| A | US 5 852 667 A (BRAMMER ANTHONY J ET AL) 22 December 1998 (1998-12-22) * column 3, line 53 - column 4, line 8 * * column 5, line 50 - column 6, line 38 * * figures 2,7 * | 20-22 | |
| A | US 5 099 514 A (ACREE DELORES F) 24 March 1992 (1992-03-24) * the whole document * | 1-22 | |

TECHNICAL FIELDS SEARCHED (Int.Cl.7)

~~The present search report has been drawn up for all claims~~

| Place of search | Date of completion of the search | Examiner |
|---|---|---|
| MUNICH | 25 January 2001 | Nieuwenhuis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 00 83 0318

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2001

| Patent document cited in search report | | Publication date | Patent family member(s) | | Publication date |
|---|---|---|---|---|---|
| US 5896451 | A | 20-04-1999 | EP | 0753229 A | 15-01-1997 |
| | | | WO | 9526604 A | 05-10-1995 |
| | | | JP | 10500540 T | 13-01-1998 |
| US 5251263 | A | 05-10-1993 | NONE | | |
| US 5276740 | A | 04-01-1994 | JP | 2778173 B | 23-07-1998 |
| | | | JP | 3214892 A | 20-09-1991 |
| | | | JP | 2778174 B | 23-07-1998 |
| | | | JP | 3214893 A | 20-09-1991 |
| | | | DE | 69113333 D | 02-11-1995 |
| | | | DE | 69113333 T | 07-03-1996 |
| | | | EP | 0464220 A | 08-01-1992 |
| | | | WO | 9111078 A | 25-07-1991 |
| | | | KR | 231219 B | 15-11-1999 |
| US 5852667 | A | 22-12-1998 | CA | 2225631 A | 23-01-1997 |
| | | | WO | 9702559 A | 23-01-1997 |
| | | | EP | 0836736 A | 22-04-1998 |
| US 5099514 | A | 24-03-1992 | NONE | | |

EPO FORM P0459

For more details about this annex : see Official Journal of the European Patent Office, No. 12/82